(19) Europäisches Patentamt

European Patent Office

Office européen des brevets

(11) **EP 1 160 216 B1**

(12) **FASCICULE DE BREVET EUROPEEN**

(45) Date de publication et mention
de la délivrance du brevet:
**01.03.2006 Bulletin 2006/09**

(51) Int Cl.:
***C03C 25/18*** (2006.01)

(21) Numéro de dépôt: **01401323.9**

(22) Date de dépôt: **21.05.2001**

(54) **Appareil d'enduction de fibres optiques**

Auftragungsvorrichtung für Lichtleitfasern

Coating device for optical fibers

(84) Etats contractants désignés:
**AT BE CH CY DE DK ES FI FR GB GR IE IT LI LU MC NL PT SE TR**

(30) Priorité: **30.05.2000 FR 0006933**

(43) Date de publication de la demande:
**05.12.2001 Bulletin 2001/49**

(73) Titulaire: **Draka Comteq B.V.**
**1018 TX Amsterdam (NL)**

(72) Inventeurs:
• **Saurel, Eric**
**62300 Lens (FR)**

• **Jurdeczka, Eric**
**62300 Lens (FR)**

(74) Mandataire: **Blokland, Arie**
**Algemeen Octrooi- en Merkenbureau,**
**P.O. Box 645**
**5600 AP Eindhoven (NL)**

(56) Documents cités:
| | |
|---|---|
| **EP-A- 0 021 677** | **WO-A-00/05608** |
| **WO-A-84/01227** | **US-A- 4 374 161** |
| **US-A- 4 531 959** | **US-A- 5 997 942** |

**Description**

La présente invention concerne un appareil d'enduction de fibres optiques, en particulier, un appareil pour enduire une fibre optique avec un revêtement coaxial avec la fibre. L'invention porte aussi sur une installation utilisant un tel appareil et un porte-filières utilisable pour former un tel appareil.

Le processus de fabrication d'une fibre optique comprend traditionnellement la fabrication d'une préforme, puis l'étirage de cette préforme en une fibre. L'opération de fibrage, c'est-à-dire la transformation de la préforme en fibre, se fait traditionnellement par étirage sans contact, par fusion de l'extrémité de la préforme dans un four à induction, rempli de gaz inerte. Le diamètre de la fibre est mesuré à la sortie du four pour asservir la vitesse de tirage afin de maintenir le diamètre de la fibre constant. La vitesse de fibrage peut atteindre plus de 15 m/s.

Typiquement, durant l'opération de fibrage, en aval de la sortie du four, la fibre est immédiatement enduite d'un revêtement primaire qui est en général une résine qu'on polymérise aux ultraviolets. Ce revêtement sert notamment à protéger la fibre contre les agressions chimiques et contre l'abrasion mécanique lors des manipulations ultérieures, à amortir les contraintes et empêcher la propagation de fissures et à absorber les modes de gaine grâce à un indice un peu plus élevé. Typiquement, on utilise des résines de type époxy ocrylate ou de type polyimides. Parfois, après application du revêtement primaire, la fibre est ensuite enduite d'un revêtement secondaire plus rigide.

Des appareillages ont été développés pour réaliser l'enduction des fibres optiques qui tiennent compte de l'impératif consistant en ce que la fibre optique, avant ou pendant l'opération d'enduction, ne doit toucher aucune surface solide.

Le document US-A-4531959 propose un tel appareil d'enduction sous la forme d'un injecteur pour appliquer un revêtement à une fibre optique et qui limite la quantité de bulles d'air emprisonnées dans le revêtement ainsi appliqué. Cet injecteur comprend une enveloppe de section circulaire présentant un alésage étagé dans lequel sont logées coaxialement une filière guide, une grille cylindrique et une filière de sortie. La filière guide comprend un orifice axial évasé, se rétrécissant dans le sens allant de l'extérieur vers la grille. La filière de sortie comprend un orifice axial évasé, se rétrécissant dans le sens allant de la grille vers l'extérieur. L'enveloppe et la grille forment entre eux une chambre qui est reliée à la périphérie de l'enveloppe par une pluralité de canaux radiaux. Pour former cette chambre, la grille comprend à chaque extrémité une collerette servant de surface de positionnement dans l'enveloppe. L'injecteur est placé dans un support permettant de le positionner par rapport à la fibre optique à enduire en aval du four de fibrage, ce support permettant également d'alimenter en résine sous pression les orifices radiaux de l'enveloppe pour l'amener dans la chambre où elle traverse la grille. La fibre optique traverse l'injecteur en entrant par l'orifice de la filière guide pour passer à l'intérieur de la grille et ressortir par la filière de sortie. En traversant la grille, la fibre optique est enduite de résine formant ainsi un revêtement dont le diamètre extérieur est déterminé par le diamètre le plus faible de l'orifice de la filière de sortie.

Cet injecteur ne permet pas d'assurer une coaxialité suffisante du revêtement en résine appliqué à la fibre par rapport à la fibre elle-même en raison des tolérances existant entre d'une part, l'alésage étagé de l'enveloppe et d'autre part, les filières et la grille. En effet, en raison de ces tolérances, ces différentes pièces peuvent se positionner légèrement de biais ou de façon décentrée, au lieu d'être bien alignées coaxialement. De plus, l'étanchéité entre d'une part, l'alésage étagé et d'autre part la grille et chacune des filières n'est pas assurée de sorte que la résine sous pression peut s'échapper depuis la chambre vers l'extérieur en passant entre l'alésage étagé et les collerettes de positionnement de la grille, puis entre l'alésage étagé et les filières. Il est possible d'intercaler des joints, par exemple des joints toriques, entre l'alésage étagé et les collerettes de la grille et/ou les filières. Néanmoins, l'interposition de tels joints accroît encore les défauts de positionnement des filières et/ou de la grille, et donc les défauts de coaxialité du revêtement par rapport à la fibre.

La présente invention a pour but d'éliminer les inconvénients de l'art antérieur, et notamment de résoudre le nouveau problème de coaxialité posé dans le document US-A-4531959.

A cette fin, la présente invention propose un appareil pour appliquer un revêtement à une fibre optique, comprenant :

- un porte-filières,
- une grille pour appliquer le revêtement à la fibre optique, la grille étant réalisée monobloc avec le porte-filières,
- une filière d'entrée et une filière de sortie agencées dans le porte-filières de part et d'autre de la grille et définissant un passage pour la fibre optique.

Selon un mode de réalisation préféré, la filière d'entrée est agencée dans un logement du porte-filières, de diamètre supérieur au diamètre interne de la grille.

Selon un autre mode de réalisation préféré, une face radiale de la filière d'entrée est en appui contre une première paroi radiale du porte-filières. De préférence, une pièce creuse vissée dans le porte-filières appuie la filière d'entrée contre la première paroi radiale.

Selon encore un outre mode de réalisation préféré, la filière de sortie est agencée dans un logement du porte-filières, de diamètre supérieur au diamètre interne de la grille. De préférence, une face radiale de la filière de sortie est en appui contre une deuxième paroi radiale du porte-filières. Une pièce creuse vissée dans le porte-filières peut avantageusement appuyer la filière de sortie contre la deuxième paroi radiale.

Selon encore un autre mode de réalisation préféré, le diamètre extérieur du porte-filières de part et d'autre de la grille est supérieur au diamètre extérieur de la grille. De préférence, le diamètre extérieur D du porte-filières de part et d'autre de la grille est supérieur à : $D > \sqrt{(d_i^2 + d_e^2)}$, avec $d_i$ le diamètre intérieur de la grille et $d_e$ le diamètre extérieur de la grille. Plus avantageusement, le diamètre extérieur D du porte-filières de part et d'autre de la grille est supérieur à : $D > 2x\sqrt{(d_i^2 + d_e^2)}$, avec $d_i$ le diamètre intérieur de la grille et $d_e$ le diamètre extérieur de la grille.

Selon un autre aspect, l'invention propose une installation pour appliquer un revêtement à une fibre optique, comprenant un support dans lequel est agencé un appareil du type précédemment décrit, le support comprenant des moyens d'amenée de liquide de revêtement autour de la grille. De préférence, une chambre est définie autour de la grille et est reliée aux moyens d'amenée de liquide de revêtement, la chambre ayant un volume supérieur au volume intérieur de la grille. Les moyens d'amenée de liquide de revêtement peuvent avantageusement comprendre plusieurs canaux débouchant radialement dans la chambre.

Selon encore un autre aspect, l'invention propose un porte-filières, comprenant une grille cylindrique de section intérieure circulaire réalisée monobloc avec le porte-filières et un récepteur de chaque côté de la grille pour recevoir une filière respective. De préférence, le diamètre extérieur du porte-filières de part et d'autre de la grille est supérieur au diamètre extérieur de la grille. Le diamètre extérieur D du porte-filières de part et d'autre de la grille est de préférence supérieur à : $D > \sqrt{(d_i^2 + d_e^2)}$, avec $d_i$ le diamètre intérieur de la grille et $d_e$ le diamètre extérieur de la grille. Le diamètre extérieur D du porte-filières de part et d'autre de la grille est avantageusement supérieur à : $D > 2x\sqrt{(d_i^2 + d_e^2)}$, avec $d_i$ le diamètre intérieur de la grille et $d_e$ le diamètre extérieur de la grille.

L'invention a pour avantage d'assurer une bonne coaxialité du revêtement de résine par rapport à la fibre optique du fait d'un positionnement optimal des filières par rapport à la grille intégrée à l'injecteur, ce qui élimine en outre les problèmes d'étanchéité existant dans l'art antérieur. La coaxiolité du revêtement avec la fibre est encore améliorée du fait du volume important de résine entourant la grille. Par ailleurs, l'invention a pour but de supprimer la paroi de l'injecteur qui définissait dans l'art antérieur une zone intermédiaire de passage de la résine de la table d'injection vers la grille située dans l'injecteur. Il en résulte à la fois une réduction des pertes de charge de la résine injectée et une meilleure homogénéité de la température de la résine dans l'injecteur. Enfin, l'invention diminue le nombre de pièces composant l'injecteur, ce qui permet une réduction de coûts notable.

D'autres caractéristiques et avantages de l'invention apparaîtront à la lecture de la description qui suit d'un mode de réalisation préféré de l'invention, donnée à titre d'exemple et en référence au dessin annexé.

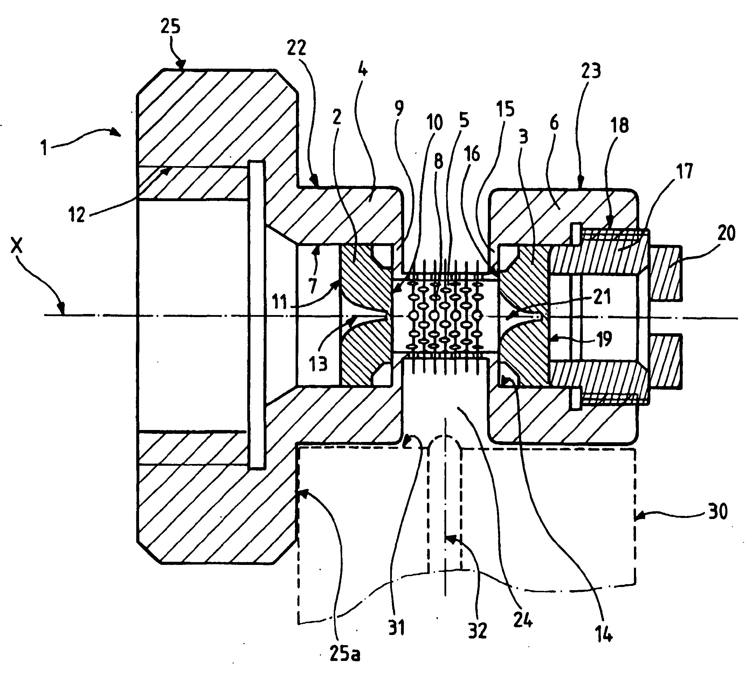

La figure 1 représente schématiquement une section longitudinale d'un appareil pour appliquer un revêtement à une fibre optique selon l'invention qui sera désigné dans la suite par le mot injecteur.

Les termes amont et aval seront utilisés en correspondance au sens de déplacement de la fibre optique à travers l'injecteur.

L'injecteur de la figure 1 comprend principalement un porte-filières 1, une filière d'entrée 2 et une filière de sortie 3. Le porte-filières 1 présente une symétrie de révolution autour de son axe longitudinal X. Le porte-filières 1 comprend une partie d'extrémité amont 4, une partie intermédiaire formant grille 5 et une partie d'extrémité avale 6 réalisées monobloc et disposées successivement le long de l'axe longitudinal X.

La partie d'extrémité amont 4 comprend un alésage 7 de section circulaire et d'axe X. L'alésage 7 est suivi dans la direction longitudinale par la grille 5. La grille 5 est définie par une paroi cylindrique de révolution, d'axe X et percée sur sa surface d'une pluralité de trous radiaux 8. Le diamètre de l'alésage 7 est supérieur au diamètre intérieur de la grille 5. Par conséquent, la partie d'extrémité amont 4 est reliée à l'extrémité amont de la grille 5 par une paroi radiale 9. La paroi radiale 9 délimite longitudinalement l'alésage 7 du côté aval. De plus, la partie extérieure 22 de la partie d'extrémité amont 4 présente, au moins dans la zone adjacente à la grille 5, un diamètre nettement plus grand que le diamètre extérieur de la grille 5.

La filière d'entrée 2 présente une section extérieure circulaire et est positionnée dans l'alésage 7 avec de préférence un ajustement serré. La filière d'entrée 2 présente du côté aval une face radiale 10 venant en butée contre la paroi radiale 9 de la partie d'extrémité amont 4. La filière d'entrée 2 est maintenue en position de préférence grâce à une pièce dont la forme peut rappeler une vis creuse, non représentée, qui coopère avec un taraudage 12 réalisé dans la partie d'extrémité amont 4, en amont de l'alésage 7. Cette vis vient appuyer sur la face amont 11 de la filière d'entrée 2 qui est en conséquence plaquée contre la paroi radiale 9. Cette vis creuse peut être d'un type similaire à la vis creuse 17 servant au maintien en position de la filière de sortie 3 qui est décrit en détail plus loin.

La filière d'entrée 2 comprend un orifice 13 traversant disposé sur l'axe X. L'orifice 13 est disposé sur l'axe X grâce au positionnement de la filière d'entrée 2 dans l'alésage 7. L'orifice 13 est évasé, se rétrécissant dons le sens de l'amont vers l'aval.

La partie d'extrémité avale 6 est similaire à la partie d'extrémité amont 4. La partie d'extrémité avale 6 comprend un alésage 14 de section circulaire et d'axe X. L'alésage 14 est précédé dans la direction longitudinale par la grille 5. Le diamètre de l'alésage 14 est supérieur au diamètre intérieur de la grille 5. Par conséquent, la partie d'extrémité avale 6 est reliée à l'extrémité avale de la grille 5 par une paroi radiale 15. La partie

radiale 15 dêlimite longitudinalement l'alésage 14 du côté amont. Le diamètre de l'alésage 14 est de préférence égal au diamètre de l'alésage 7. De plus, la partie extérieure 23 de la partie d'extrémité avale 6 présente un diamètre nettement plus grand que le diamètre extérieur de la grille 5 et est de préférence égal ou diamètre de la partie extérieure 22 de la partie d'extrémité amont 4.

La filière de sortie 3 présente une section extérieure circulaire et est positionnée dans l'alésage 14 avec de préférence un ajustement serré. La filière de sortie 3 présente du côté amont une face radiale 16 venant en butée contre la paroi radiale 15 de la partie d'extrémité avale 3. La filière de sortie 3 est maintenue en position de préférence grâce à une vis creuse 17 qui coopère avec un taraudage 18 réalisé dans la partie d'extrémité avale 6, en aval de l'alésage 14.

La vis creuse 17 présente une surface radiale appuyant sur la face avale 19 de la filière de sortie 3 qui est en conséquence plaquée contre la paroi radiale 15. La vis creuse 17 présente à son extrémité un carré de manoeuvre creux 20 ou similaire faisant saillie longitudinalement hors du porte-filières 1 pour permettre son serrage ou desserrage à l'aide d'une clé. La vis 17 est creuse pour définir un passage libre le long de l'axe longitudinal X pour la fibre optique.

La filière de sortie 3 comprend un orifice 21 traversant, disposé sur l'axe X. L'orifice 21 est disposé sur l'axe X grâce au positionnement de la filière de sortie 3 dans l'alésage 14. L'orifice 21 est évasé, se rétrécissant dans le sens de l'amont vers l'aval.

L'injecteur de la figure 1 est agencé dans un support 30 qui alimente l'injecteur en liquide de revêtement à appliquer à la fibre optique. Le support 30 est d'un type conventionnel, connu en soi. Le support 30 est représenté partiellement sur la figure 1 sous forme de pointillés pour un côté de l'axe longitudinal X. Le support 30 présente un logement 31 traversant dans lequel sont insérés les parties extérieures 22 et 23 des parties d'extrémité amont et avale 4 et 6 du porte-filières 1. Des moyens d'étanchéité, par exemple des joints toriques, sont disposés entre d'une part le logement 31 et d'autre part, les parties extérieures 22 et 23 respectivement, pour éviter des fuites de liquide de revêtement vers l'extérieur. Dans l'exemple de la figure 1, la partie extérieure 22 du porte-filières 1 présente en outre une partie amont 25 de diamètre supérieur au reste de la partie extérieure 22 et qui s'y raccorde par le biais d'une surface radiale 25a. Cette surface radiale 25a vient avantageusement en butée contre une surface extérieure du support 30. Le support 30 comprend un ou plusieurs canaux 32 d'amenée du liquide de revêtement vers la grille 5. Ces canaux 32 débouchent radialement dons le logement 31 entre les parois radiales 9 et 15 de l'injecteur. Généralement, le support 30 comprend une pluralité de canaux 32, avantageusement au moins quatre, disposés à angles réguliers autour du logement 31 pour assurer une alimentation uniforme en liquide de revêtement autour de la grille 5.

Le support 30 équipé de l'injecteur est disposé entre la sortie du four de fibrage et des moyens de tractions de la fibre optique.

Le fonctionnement de l'installation d'enduction selon l'invention est classique. La fibre optique obtenue à la sortie du four de fibrage traverse l'injecteur en pénétrant par la partie d'extrémité amont 4, c'est-à-dire en pénétrant par la vis creuse, non représentée, qui est vissée dons le taraudage 12 de la filière d'entrée 2. De là, la fibre optique pénètre et traverse la grille 5, puis traverse la partie d'extrémité avale 6 en pénétrant et traversant d'abord l'orifice 21 de la filière de sortie 3, puis le creux de la vis 17. La fibre optique traverse ainsi l'injecteur suivant son axe longitudinal X.

Le liquide de revêtement de type conventionnel, généralement une résine, est amenée sous pression par le ou les canaux 32 du support 30 dans la chambre annulaire 24 définie entre les parois radiales 9 et 15 d'une part, et entre la grille 5 et la paroi du logement 31 d'autre part. Le liquide de revêtement dans la chambre 24 traverse alors les trous 8 de la grille 5 pour être projeté radialement sur la fibre optique.

Le diamètre minimal de l'orifice évasé 21 de la filière de sortie 3 détermine le diamètre du revêtement appliqué à la fibre optique. Le diamètre minimal de l'orifice évasé 21 est déterminé de façon connue en considération de divers paramètres tels que le diamètre de la fibre optique, l'épaisseur de revêtement et le type de liquide de revêtement employé.

L'orifice 13 de la filière d'entrée 2 a classiquement un diamètre minimal supérieur ou diamètre minimal de l'orifice 21 de la filière de sortie 3. L'orifice 13 facilite l'introduction initiale de la fibre optique dans l'injecteur en permettant notamment de la centrer pour lui faire traverser la grille 5, puis l'orifice 21 de la filière de sortie 3. Le diamètre minimal de l'orifice 13 est suffisamment grand pour éviter que la fibre optique entre en contact avec sa paroi durant l'opération de fibrage et de revêtement de la fibre optique.

La forme et le dimensionnement des orifices 13 et 21 sont définis de façon connue en soi.

De même, le dimensionnement de la grille 5 - longueur, diamètre extérieur, épaisseur de paroi... - ainsi que les caractéristiques des trous 8 - nombre total de trous, nombre de trous par rangée, nombre de rangées de trous, dispositions relatives des trous, diamètre des trous... - sont définis de façon connue en soi.

Par ailleurs, le support 30 comporte généralement des moyens pour positionner correctement l'injecteur par rapport à la fibre optique, c'est-à-dire pour faire correspondre l'axe longitudinal X de l'injecteur avec l'axe de la fibre optique afin que la fibre traverse les orifices 13 et 21 des filières 2 et 3.

L'installation d'endudion comprend encore un ensemble de moyens connus en soi tels qu'un réservoir de liquide de revêtement, des tubes d'alimentation reliant le réservoir au support 30, des moyens pour asservir la pression du liquide de revêtement en fonction de la vitesse de déplacement de la fibre optique, des moyens pour maintenir le liquide de revêtement à la température adéquate. La pression d'injection du liquide de revêtement et son asservissement sont déterminés de façon connue en soi.

En aval du support 30, la fibre optique enduite du liquide de revêtement traverse généralement des moyens pour sécher ou durcir le liquide de revêtement qui sont adaptés au type de liquide de revêtement utilisé ; en général, il s'agit d'une source de rayonnement ultraviolet.

L'injecteur selon l'invention permet d'obtenir une excellente coaxialité du revêtement appliqué à la fibre par rapport à la fibre elle-même en raison d'un positionnement fiable des filières et de la grille. Le positionnement fiable de la grille 5 est évidemment obtenu par le fait qu'elle est intégrée dans le porte-filières 1. Ainsi, les tolérances et défauts de positionnement de la grille à l'intérieur du porte-filières existant dons l'art antérieur sont supprimés. La coaxialité des filières d'entrée 2 et de sortie 3 et de la grille 5 est obtenue par le positionnement avec ajustement des filières d'entrée 2 et de sortie 3 dans leur alésage respectif 7 et 14. L'usinage des alésages 7 et 14 est facilité du fait qu'il peut être réalisé depuis l'extrémité correspondante du porte-filières 1 et sur des diamètres supérieurs au diamètre intérieur de la grille 5.

L'injecteur selon l'invention permet d'obtenir une excellente coaxialité du revêtement appliqué à la fibre par rapport à la fibre elle-même en raison également de la répartition homogène et équilibrée en pression du flux de liquide de revêtement injecté à travers la grille 5 autour de la fibre optique. En effet, La différence de diamètre entre d'une part, la grille 5 et d'autre part, les parties extérieures 22 et 23 des parties d'extrémité amont 4 et avale 5 du porte-filières 1 permettent de définir un volume important pour la chambre 24. Au contraire, la chambre entourant la grille dans les injecteurs de l'art antérieur a un volume nettement plus faible car la chambre est délimitée extérieurement par la paroi intérieure du porte-filières, et non pas par la paroi du support dans lequel est placé l'injecteur. Or, il a été observé que l'augmentation du volume de la chambre permet de réduire significativement la vitesse de déplacement de la résine dans la chambre avec en corollaire un remplacement dans la chambre du liquide de revêtement injecté à travers la grille 5 se faisant de façon homogène, sans perturbations, dans l'ensemble de la chambre. Il en résulte que l'injection de liquide de revêtement à travers les trous 8 de la grille 5 se fait alors suivant une pression homogène et équilibrée autour de la fibre optique maintenant cette dernière centrée sur l'axe longitudinal X. Ainsi, le revêtement appliqué à la fibre optique et déterminé en diamètre par la filière de sortie 3 également placée sur l'axe X, sera parfaitement coaxial avec la fibre optique elle-même. Il est avantageux que la chambre 24 ait un volume supérieur au volume intérieur de la grille 5. Dans le mode de réalisation décrit, cela signifie que le diamètre des parties extérieures 22 et 23 est supérieur à la racine carrée de la somme du diamètre intérieur au carré et du diamètre extérieur au carré de la grille (5), autrement dit :

$$D > \sqrt{(d_i{}^2 + d_e{}^2)}$$

avec : D = diamètre des parties extérieures 22 et 23 ;
$d_i$ = diamètre intérieur de la grille (5) et
$d_e$ = diamètre extérieur de la grille (5).

Dans un mode de réalisation particulièrement préféré, le diamètre des parties extérieures 22 et 23 est supérieur à deux fois la racine carrée de la somme du diamètre intérieur au carré et du diamètre extérieur au carré de la grille (5), autrement dit :

$$D > 2 \times \sqrt{(d_i{}^2 + d_e{}^2)}$$

A titre d'exemple de dimensionnement, on peut avoir D = 23 mm, $d_i$ = 6,6 mm et $d_e$ = 8,6 mm.

A titre d'illustration, la grille 5 a généralement une longueur comprise entre 7 et 15 mm.

Enfin, l'injecteur selon l'invention assure l'étanchéité entre le porte-filières 1 et la filière d'entrée 2 du fait de la pression exercée par la face radiale 10 de la filière d'entrée 2 contre la paroi radiale 9 de la partie d'extrémité amont 4 sous l'action de la vis creuse de serrage, non représentée, coopérant avec le taraudage 12. De même, l'étanchéité entre le porte-filières 1 et la filière de sortie 3 est assurée par la pression exercée par la face radiale 16 de la filière de sortie 3 contre la paroi radiale 15 de la partie d'extrémité avale 6 sous l'action de la vis creuse 17.

Le porte-filières 1 est de préférence réalisé en acier inoxydable et est obtenu par usinage. L'acier inoxydable a notamment pour avantage de ne pas diffuser de particules dans le liquide de revêtement. En particulier, il pourra être réalisé en acier inoxydable 316 Ti. Les filières d'entrée 2 et de sortie 3 sont de préférence en carbure de tungstène et obtenues par usinage.

L'injecteur selon l'invention peut être utilisé pour appliquer aussi bien le revêtement primaire qu'un revêtement secondaire à la fibre optique. Il peut être utilisé pour tout type de fibre optique, par exemple pour des fibres optiques en silice, en plastique, en verres fluorés...

Bien entendu, la présente invention n'est pas limitée aux exemples et au mode de réalisation décrits et représentés, mais elle est susceptible de nombreuses variantes accessibles à l'homme de l'art.

**Revendications**

1. Un appareil pour appliquer un revêtement à une fibre optique, comprenant :

   - un porte-filières (1),
   - une grille (5) pour appliquer le revêtement à la fibre optique, la grille étant réalisée monobloc avec le porte-filières (1),
   - une filière d'entrée (2) et une filière de sortie (3) agencées dons le porte-filières (1) de part et d'autre de la grille (5) et définissant un passage pour la fibre optique.

2. L'appareil selon la revendication 1, **caractérisé en ce que** la filière d'entrée (2) est agencée dans un logement (7) du porte-filières (1), de diamètre supérieur au diamètre interne de la grille (5).

3. L'appareil selon la revendication 1 ou 2, **caractérisé en ce qu'**une face radiale (10) de la filière d'entrée (2) est en appui contre une première paroi radiale (9) du porte-filières (1).

4. L'appareil selon la revendication 3, **caractérisé en ce qu'**une pièce creuse vissée dans le porte-filières (1) appuie la filière d'entrée (2) contre la première paroi radiale (9).

5. L'appareil selon l'une quelconque des revendications 1 à 4, **caractérisé en ce que** la filière de sortie (3) est agencée dans un logement (14) du porte-filières (1), de diamètre supérieur au diamètre interne de la grille (5).

6. L'appareil selon la revendication 5, **caractérisé en ce qu'**une face radiale (16) de la filière de sortie (3) est en appui contre une deuxième paroi radiale (15) du porte-filières (1).

7. L'appareil selon la revendication 6, **caractérisé en ce qu'**une pièce creuse (17) vissée dans le porte-filières (1) appuie la filière de sortie (3) contre la deuxième paroi radiale (15).

8. L'appareil selon l'une quelconque des revendications 1 à 7, **caractérisé en ce que** le diamètre extérieur du porte-filières (1) de part et d'autre de la grille (5) est supérieur au diamètre extérieur de la grille (5).

9. L'appareil selon la revendication 8, **caractérisé en ce que** le diamètre extérieur D du porte-filières (1) de part et d'autre de la grille (5) est supérieur à : D > $\sqrt{(d_i^2 + d_e^2)}$, avec $d_i$ le diamètre intérieur de la grille (5) et $d_e$ le diamètre extérieur de la grille (5).

10. L'appareil selon la revendication 8 ou 9, **caractérisé en ce que** le diamètre extérieur D du porte-filières (1) de part et d'autre de la grille (5) est supérieur à : D > $2 \times \sqrt{(d_i^2 + d_e^2)}$, avec $d_i$ le diamètre intérieur de la grille (5) et $d_e$ le diamètre extérieur de la grille (5).

11. Une installation pour appliquer un revêtement à une fibre optique, comprenant un support (30) dans lequel est agencé un appareil selon l'une quelconque des revendications 1 à 10, le support (30) comprenant des moyens (32) d'amenée de liquide de revêtement autour de la grille (5).

12. L'installation selon la revendication 11, **caractérisée en ce qu'**une chambre (24) est définie autour de la grille (5) et est reliée aux moyens (32) d'amenée de liquide de revêtement, dans laquelle la chambre a un volume supérieur au volume intérieur de la grille (5).

13. L'installation selon la revendication 12, **caractérisée en ce que** les moyens (32) d'amenée de liquide de revêtement comprennent plusieurs canaux (32) débouchant radialement dans la chambre (24).

14. Un porte-filières, comprenant une grille (5) cylindrique de section intérieure circulaire réalisée monobloc avec le porte-filières (1) et un récepteur (7, 9 ; 14, 15) de chaque côté de la grille (5) pour recevoir une filière respective.

15. Le porte-filières selon la revendication 14, **caractérisé en ce que** le diamètre extérieur du porte-filières (1) de part et d'autre de la grille (5) est supérieur au diamètre extérieur de la grille (5).

16. Le porte-filières selon la revendication 15, **caractérisé en ce que** le diamètre extérieur D du porte-filières (1) de part et d'autre de la grille (5) est supérieur à : D > $\sqrt{(d_i^2 + d_e^2)}$, avec $d_i$ le diamètre intérieur de la grille (5) et $d_e$ le diamètre extérieur de la grille (5).

17. Le porte-filières selon la revendication 15 ou 16, **caractérisé en ce que** le diamètre extérieur D du porte-filières (1) de part et d'autre de la grille (5) est supérieur à : D > $2 \times \sqrt{(d_i^2 + d_e^2)}$, avec $d_i$ le diamètre intérieur de la grille (5) et $d_e$ le diamètre extérieur de la grille (5).

**Patentansprüche**

1. Vorrichtung zum Aufbringen einer Beschichtung auf eine optische Faser, umfassend:

   - einen Ziehdüsenhalter (1),
   - ein Gitter (5) zum Aufbringen der Beschichtung auf die optische Faser, wobei das Gitter mit dem Ziehdüsenhalter (1) aus einem Stück realisiert ist,
- eine Eingangsziehdüse (2) und eine Ausgangsziehdüse (3), welche in dem Ziehdüsenhalter (1) zu beiden Seiten des Gitters (5) angeordnet sind und einen Durchgang für die optische Faser definieren.

2. Vorrichtung nach Anspruch 1, **dadurch gekennzeichnet, dass** die Eingangsziehdüse (2) in einer Aufnahme (7) des Ziehdüsenhalters (1) mit größerem Durchmesser als der Innendurchmesser des Gitters (5) angeordnet ist.

3. Vorrichtung nach Anspruch 1 oder 2, **dadurch gekennzeichnet, dass** eine radiale Seite (10) der Eingangsziehdüse (2) in Anlehnung an einer ersten radialen Wand (9) des Ziehdüsenhalters (1) ist.

4. Vorrichtung nach Anspruch 3, **dadurch gekennzeichnet, dass** ein hohles Teil, welches in den Ziehdüsenhalter (1) geschraubt ist, die Eingangsziehdüse (2) gegen die erste radiale Wand (9) drückt.

5. Vorrichtung nach einem der Ansprüche 1-4, **dadurch gekennzeichnet, dass** die Ausgangsziehdüse (3) in einer Aufnahme (14) des Ziehdüsenhalters (1) mit größerem Durchmesser als der Innendurchmesser des Gitters (5) angeordnet ist.

6. Vorrichtung nach Anspruch 5, **dadurch gekennzeichnet, dass** eine radiale Seite (16) der Ausgangsziehdüse (3) in Anlehnung an einer zweiten radialen Wand (15) des Ziehdüsenhalters (1) ist.

7. Vorrichtung nach Anspruch 6, **dadurch gekennzeichnet, dass** ein hohles Teil (17), welches in den Ziehdüsenhalter (1) geschraubt ist, die Ausgangsziehdüse (3) gegen die zweite radiale Wand (15) drückt.

8. Vorrichtung nach einem der Ansprüche 1-7, **dadurch gekennzeichnet, dass** der Außendurchmesser des Ziehdüsenhalters (1) auf beiden Seiten des Gitters (5) größer als der Außendurchmesser des Gitters (5) ist.

9. Vorrichtung nach Anspruch 8, **dadurch gekennzeichnet, dass** der Außendurchmesser D des Ziehdüsenhalters (1) auf beiden Seiten des Gitters (5) größer ist als: $D > \sqrt{(d_i^2 + d_e^2)}$ , wobei $d_i$ der Innendurchmesser des Gitters (5) ist und $d_e$ der Außendurchmesser des Gitters (5) ist.

10. Vorrichtung nach Anspruch 8 oder 9, **dadurch ge-**

kennzeichnet, dass** der Außendurchmesser D des Ziehdüsenhalters (1) auf beiden Seiten des Gitters (5) größer ist als: $D > 2 \times \sqrt{(d_i^2 + d_e^2)}$ , wobei $d_i$ der Innendurchmesser des Gitters (5) ist und $d_e$ der Außendurchmesser des Gitters (5) ist.

11. Einrichtung zum Aufbringen einer Beschichtung auf eine optische Faser, umfassend eine Halterung (30), in welcher eine Vorrichtung gemäß einem der Ansprüche 1-10 angeordnet ist, wobei die Halterung (30) Mittel (32) zur Zuführung von Beschichtungsflüssigkeit um das Gitter (5) herum umfasst.

12. Einrichtung nach Anspruch 11, **dadurch gekennzeichnet, dass** eine Kammer (24) um das Gitter (5) herum definiert ist und mit den Mitteln (32) zur Zuführung von Beschichtungsflüssigkeit verbunden ist, wobei die Kammer ein Volumen aufweist, welches größer ist als das Innenvolumen des Gitters (5).

13. Einrichtung nach Anspruch 12, **dadurch gekennzeichnet, dass** die Mittel (32) zur Zuführung von Beschichtungsflüssigkeit mehrere Kanäle (32) umfassen, welche radial in die Kammer (24) münden.

14. Ziehdüsenhalter, umfassend ein zylindrisches Gitter (5) mit kreisförmigem Innenquerschnitt, welches mit dem Ziehdüsenhalter (1) aus einem Teil realisiert ist, und eine Aufnahme (7, 9; 14, 15) auf jeder Seite des Gitters (5), um eine entsprechende Ziehdüse aufzunehmen.

15. Ziehdüsenhalter nach Anspruch 14, **dadurch gekennzeichnet, dass** der Außendurchmesser des Ziehdüsenhalters (1) auf beiden Seiten des Gitters (5) größer ist als der Außendurchmesser des Gitters (5).

16. Ziehdüsenhalter nach Anspruch 15, **dadurch gekennzeichnet, dass** der Außendurchmesser D des Ziehdüsenhalters (1) auf beiden Seiten des Gitters (5) größer ist als: $D > \sqrt{(d_i^2 + d_e^2)}$ , wobei $d_i$ der Innendurchmesser des Gitters (5) ist und $d_e$ der Außendurchmesser des Gitters (5) ist.

17. Ziehdüsenhalter nach Anspruch 15 oder 16, **dadurch gekennzeichnet, dass** der Außendurchmesser D des Ziehdüsenhalters (1) auf beiden Seiten des Gitters (5) größer ist als: $D > 2 \times \sqrt{(d_i^2 + d_e^2)}$ , wobei $d_i$ der Innendurchmesser des Gitters (5) ist und $d_e$ der Außendurch-

messer des Gitters (5) ist.

**Claims**

1. An apparatus for applying a coating to an optical fibre, comprising:

   - a die carrier (1),
   - a grille (5) for applying the coating to the optical fibre, the grille being of integral construction with the die carrier (1),
   - an inlet die (2) and an outlet die (3) arranged in the die carrier (1) on respective sides of the grille (5) and defining a passageway for the optical fibre.

2. The apparatus according to claim 1, **characterised in that** the inlet die (2) is arranged in a seating (7) in the die carrier (1), the seating having a diameter greater than the internal diameter of the grille (5).

3. The apparatus according to claim 1 or 2, **characterised in that** a radial face (10) of the inlet die (2) is abutted against a first radial wall (9) of the die carrier (1).

4. The apparatus according to claim 3, **characterised in that** a hollow part screwed into the die carrier (1) presses the inlet die (2) into abutment against the first radial wall (9).

5. The apparatus according to any one of claims 1 to 4, **characterised in that** the outlet die (3) is arranged in a seating (14) in the die carrier (1), the seating having a diameter greater than the internal diameter of the grille (5).

6. The apparatus according to claim 5, **characterised in that** a radial face (16) of the outlet die (3) is abutted against a second radial wall (15) of the die carrier (1).

7. The apparatus according to claim 6, **characterised in that** a hollow part (17) screwed into the die carrier (1) presses the outlet die (3) into abutment against the second radial wall (15).

8. The apparatus according to any one of claims 1 to 7, **characterised in that** the external diameter of the die carrier (1) on each side of the grille (5) is greater than the external diameter of the grille (5).

9. The apparatus according to claim 8, **characterised in that** the external diameter D of the die carrier (1) on each side of the grille (5) is greater than : $D > \sqrt{(d_i^2 + d_e^2)}$ wherein $d_i$ is the internal diameter of the grille (5) and $d_e$ is the external diameter of the grille (5).

10. The apparatus according to claim 8 or 9, **characterised in that** the external diameter D of the die carrier (1) on each side of the grille (5) is greater than : $D > 2 \times \sqrt{(d_i^2 + d_e^2)}$ wherein $d_i$ is the internal diameter of the grille (5) and $d_e$ is the external diameter of the grille (5).

11. An installation for applying a coating to an optical fibre, comprising a support (30) wherein there is arranged an apparatus according to any one of claims 1 to 10, the support (30) comprising means (32) for supplying coating liquid around the grille (5).

12. The installation according to claim 11, **characterised in that** a chamber (24) is defined around the grille (5) and is in communication with the means (32) for supplying coating liquid, the chamber having a volume greater than the internal volume of the grille (5).

13. The installation according to claim 12, **characterised in that** the means (32) for supplying coating liquid comprise a plurality of channels (32) opening radially into the chamber (24).

14. A die carrier, comprising a cylindrical grille (5) of circular internal cross-section which is of integral construction with the die carrier (1) and a receiver (7, 9; 14, 15) on each side of the grille (5) for receiving a respective die.

15. The die carrier according to claim 14, **characterised in that** the external diameter of the die carrier (1) on each side of the grille (5) is greater than the external diameter of the grille (5).

16. The die carrier according to claim 15, **characterised in that** the external diameter D of the die carrier (1) on each side of the grille (5) is greater than : $D > \sqrt{(d_i^2 + d_e^2)}$ wherein $d_i$ is the internal diameter of the grille (5) and $d_e$ is the external diameter of the grille (5).

17. The die carrier according to claim 15 or 16, **characterised in that** the external diameter D of the die carrier (1) on each side of the grille (5) is greater than : $D > 2 \times \sqrt{(d_i^2 + d_e^2)}$ wherein $d_i$ is the internal diameter of the grille (5) and $d_e$ is the external diameter of the grille (5).